# FASCICULE DE BREVET EUROPEEN

(11) **EP 1 428 333 B1**
(45) Date de publication et mention de la délivrance du brevet: **31.08.2005**
(21) Numéro de dépôt: 02781370.8
(22) Date de dépôt: 06.09.2002
(51) Int. Cl.: H04B 10/213

(54) **RESEAU EN ANNEAU REALISE A PARTIR D'UN BUS OPTIQUE DOUBLE**
OPTISCHES RINGNETZWERK MIT DOPPELTEM OPTISCHEM BUS
RING NETWORK MADE USING A DUAL OPTICAL DATA BUS

(30) Priorité: 06.09.2001 FR 0111534
(43) Date de publication de la demande: 16.06.2004
(73) Titulaire: ALCATEL, 75008 Paris (FR)
(72) Inventeur: DOTARO, Emmanuel, F-91370 Verrières le Buisson (FR); LE SAUZE, Nicolas, F-91440 Bures-Sur-Yvette (FR); GE, An, Plano, TX 75025 (US); TANCEVSKI, Ljubisa, Dallas, TX 75252 (US)
(74) Mandataire: Sciaux, Edmond
(86) Numéro de dépôt international: PCT/FR2002/003032
(87) Numéro de publication internationale: WO 2003/021823

(56) Documents cités:
- EP-A- 1 128 585
- WO-A-00/48347
- WO-A-00/72491
- US-A- 5 058 101
- US-A- 5 864 415
- US-B1- 6 256 321

## Description

La présente invention concerne la technologie des transmissions par fibres optiques en général, et a trait plus particulièrement un réseau optique en anneau réalisé à partir d'un bus optique double.

L'utilisation toujours croissante des réseaux de transport de données, publiques où privés, suscite depuis des années une énorme demande de bande passante pour assurer l'échange d'une quantité d'information toujours plus grande et l'établissement de communications sous toutes ses formes. Celles-ci vont de l'échange de simples fichiers de texte et d'images au développement considérable du courrier électronique (E-mail) et de toutes sortes de messageries d'entreprise, en passant par le transport de la voix, avec la téléphonie classique utilisant un mode et des protocoles dit TDM ('Time Division Multiplexing') voire le transport de cette dernière en mode paquets avec les protocoles d'échange de type VolP ('Voice over IP') jusqu'à la distribution de vidéo et, bien entendu, de toutes les applications résultant du développement considérable d'Internet et notamment de son application principale, universellement utilisée, le 'World Wide Web'(WWW).

Pour faire face à cette demande de bande passante les responsables de la mise en oeuvre de ces réseaux ont rapidement dû avoir recours au transport des signaux porteurs de l'information sous forme optique pour bénéficier d'une part du faible coût des fibres elles-mêmes et d'autre part des très hauts débits qu'on peut atteindre malgré des distances de transmission qui peuvent se mesurer en kilomètres voire en dizaines et même en centaines de kilomètres sans avoir besoin de régénérer le signal. L'atténuation étant en effet très faible, en particulier dans les fibres dîtes mono modes, comparée à l'atténuation résultant de la transmission électrique par câbles en cuivre par exemple. Par ailleurs une transmission optique évite tous les problèmes liés aux perturbations électromagnétiques qui nécessitent de coûteux circuits de protection et peuvent entraîner de fréquentes erreurs de transmission.

Le premier pas dans l'utilisation des fibres optiques a consisté essentiellement en des liaisons point à point. C'est à dire qu'entre deux noeuds d'un réseau les signaux de transport sont convertis en signaux lumineux puis immédiatement reconvertis en signaux électriques à la réception pour être traités par le noeud receveur qui doit, après analyse des informations reçues, soit relayer l'information vers un autre noeud du réseau soit utiliser les données localement. Dans le premier cas, bien entendu, une nouvelle conversion électrique optique est nécessaire alors même que l'information utile transportée n'a pas à être modifiée et que seule la destination finale doit être examinée.

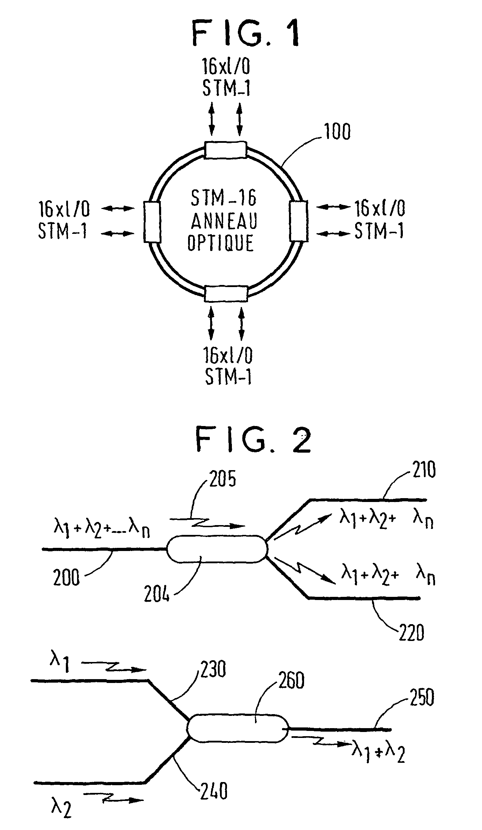

Ce mode de fonctionnement est en particulier celui des anneaux de type SONET ('Synchronous Optical NETwork) ou SDH ('Synchronous Digital Hierarchy') qui sont respectivement des standards Nord-américains et Européens, pour l'essentiel compatibles. Notamment, ils normalisent des vitesses de transmission dont les plus utilisées, pour les plus rapides d'entre elles, sont à 2,48 Gb/s (SONET OC-48 ou SDH STM-16), 10 Gb/s (SONET OC-192 ou SDH STM-64) et même à 40 Gb/s (SONET OC-768 ou SDH STM-256). Il est à noter que ces anneaux, comme indiqué sur **la figure 1,** sont en fait constitués d'un double anneau de fibres optiques 100 dont l'un est une voie de protection, au repos. Celui-ci ne sert qu'en cas de rupture de la fibre active après qu'une commutation automatique rapide, nécessitant moins de 50 millisecondes, dite APS pour 'Automatic Protection Switching', s'est produite afin d'assurer la continuité du trafic qui constitue un critère de qualité essentiel pour ces réseaux transportant d'énormes quantité de données. Les noeuds de ces réseaux sont généralement constitués de MIE (Multiplexeur Insertion/Extraction ou encore ADM pour 'Add/Drop Multiplexor) 110 pour donner accès localement à une partie seulement du flux de données sans affecter le reste du trafic nécessitant cependant à chaque fois une conversion totale O-E-O (Optique-Electrique-Optique) de ce dernier. Les réseaux SONET/SDH ont connu beaucoup de succès et sont toujours très largement utilisés en raison du système de protection APS ci-dessus mentionné et de leur faculté inhérente d'adaptation à des vitesses de transmission toujours plus grandes comme le demande le développement extrêmement rapide du niveau des échanges de données observé dans les années passées.

Cette première forme d'utilisation des fibres optiques s'est avérée cependant rapidement insuffisante. Si la fibre elle-même est peu onéreuse son déploiement peut demander beaucoup de main d'oeuvre et s'avérer extrêmement coûteux. Plutôt que de déployer plus de fibres optiques, quand la capacité d'un réseau installé devient insuffisante, la solution a été trouvée dans une meilleure utilisation des fibres déjà en place. La technique dite WDM ou 'Wavelength Division Multiplexing' permet, en transmettant des fréquences différentes dans une même fibre, de multiplier le nombre de canaux de transmission, complètement indépendants, sur une même fibre physique. En d'autres termes, en transmettant des rayons lumineux de 'couleurs' différentes, la bande passante d'une simple fibre est multipliée d'autant. La technique dite DWDM (Dense WDM), qui a vite succédé à WDM, permet ainsi de multiplexer 80 canaux voire plus.

Si ces techniques ont effectivement permis de faire face à l'énorme demande de bande passante de fait, une couche optique de transport des données s'est ainsi développée qui ne va pas sans poser quelques problèmes. La raison essentielle est que, dans l'état actuel de la technique, le traitement des signaux et des données transportées continue de se faire essentiellement au niveau électrique. Ainsi, chaque fois qu'un examen des données transportées est nécessaire une conversion optique/électrique est indispensable. En particulier dans les systèmes transportant l'information en mode 'paquets' il est le plus souvent nécessaire de consulter l'entête desdits paquets pour déterminer, à chaque noeud de réseau, la destination suivante ('next hop'). Ceci est en particulier le cas du protocole Internet (lP), évidemment très utilisé, qui fonctionne en mode dit sans connexion ('connection-less') au contraire d'autres protocoles pour lesquels un chemin doit être pré-établi, par une signalisation appropriée, avant que les échanges de données puissent se produire. Ceci est le cas du téléphone et des modes de transport dits TDM déjà mentionné précédemment.

Ainsi, si le transport optique des signaux servant aux échanges de données est intrinsèquement peu onéreux, la conversion électrique/optique, et son inverse, restent chères. En particulier l'émission de lumière dans une fibre optique se fait presque toujours à partir de lasers qui doivent être d'autant plus élaborés que l'on a choisi de mélanger de nombreuses longueurs d'ondes sur une même fibre (DWDM). Ceci, bien sûr, parce que les différentes 'couleurs' ou longueurs d'ondes utilisées sont ainsi d'autant plus rapprochées et que leur spectre d'émission risquerait de se recouvrir, devenant indiscernable à la réception, sauf à employer des lasers capables d'émettre dans une bande de fréquences très étroite, plus difficile à réaliser et donc plus coûteux.

Le document **EP 1.128.585** décrit un réseau optique comportant plusieurs niveaux. Le niveau le plus bas comporte un anneau, et des stations couplées à cet anneau par des noeuds d'accès qui ne nécessitent pas de conversions optique/électrique et électrique/optique. Cet anneau comprend deux fibres optiques portant respectivement les informations montantes et les informations descendantes. Chaque noeud est relié à une pluralité de stations par un réseau en étoile. Chaque noeud d'accès comprend :
- deux coupleurs optiques passifs couplés respectivement aux deux fibres ;
- un démultiplexeur relié à un premier coupleur, pour les signaux descendants ;
- et un multiplexeur relié au second coupleur, pour les signaux montants.
Chaque station est reliée au noeud d'accès par une fibre unique qui lui est propre. Sur cette fibre sont multiplexées une longueur d'onde portant un signal montant, et une longueur d'onde différente portant un signal descendant. Chaque station communique avec le reste du noeud au moyens de deux longueurs d'onde qui sont propres à cette station.

Dans ce réseau connu, des coupleurs optiques passifs permettent de dériver et/ou injecter un trafic local, donc de pouvoir réaliser une fonction de type MIE (Multiplexeur Insertion/Extraction) en mode purement optique, au moyen de composants peu coûteux. Par contre, ce réseau nécessite une paire de longueurs d'onde distinctes pour chaque station, donc un nombre élevé de longueurs d'onde. Le but de l'invention est de proposer un réseau optique permettant une utilisation plus efficace des ressources en longueurs d'onde.

L'objet de l'invention est donc un réseau optique en anneau comprenant au moins une fibre optique et au moins deux stations couplées sur ladite fibre optique au moyen de coupleurs optiques, les deux extrémités de ladite fibre optique étant reliées à un noeud d'accès audit réseau optique; ledit noeud d'accès comprenant :
- au moins un émetteur optique émettant un signal optique descendant ayant au moins une première longueur d'onde en direction d'une extrémité de la dite fibre,
- au moins un récepteur optique, à l'autre extrémité de cette fibre, et recevant un signal optique montant ayant au moins une deuxième longueur d'onde dite "montante", distincte de ladite première longueur d'onde ;
- et des moyens permettant d'assurer la communication entre ledit récepteur optique et ledit émetteur optique ;
ledit réseau optique étant **caractérisé** en ce qu'une pluralité de stations partagent au moins une longueur d'onde montante pour émettre chacune vers un récepteur optique dudit noeud d'accès, en ce qu'il comporte des moyens de contrôle d'accès au médium, permettant ledit partage de longueur d'onde montante, et en ce que l'une au moins des stations comporte des moyens pour intercepter et détecter au moins une dite longueur d'onde montante partagée.

Le réseau ainsi caractérisé utilise mieux les ressources en longueurs d'onde puisque les moyens de contrôle d'accès permettent à plusieurs stations de partager une même longueur d'onde pour les signaux montants. Cela se traduit par un abaissement du coût du réseau pour une capacité de transmission donnée.

Selon un mode réalisation préféré, ce réseau est caractérisé en ce que lesdits moyens de contrôle d'accès au médium, permettent à une pluralité de stations de partager au moins une longueur d'onde descendante.

Selon un mode de réalisation préféré, le réseau selon l'invention comporte en outre des moyens de contrôle d'admission d'appel qui comportent des moyens pour :
- recevoir un message de requête de bande passante, émis par une station, et indiquant un type de données à insérer sur une longueur d'onde montante ;
- déterminer une valeur de paramètre définissant un rythme d'insertion de données sur une longueur d'onde montante utilisable par la station ayant émis un message de requête de bande passante; cette valeur étant déterminée en fonction du trafic présent sur l'anneau, et du type des données à insérer ;
- émettre un message de commande adressée à cette station et contenant la valeur de paramètre.

Cet anneau peut comporter une seule fibre supportant à la fois les signaux descendants et les signaux montants, qui se propagent, de préférence, dans le même sens.

Dans un autre mode de réalisation, une seconde fibre assure la protection contre des défaillances de la première. Dans d'autres modes de réalisation, les diverses longueurs d'onde utilisées peuvent être réparties sur plusieurs fibres. Dans tous les cas, les longueurs d'onde montantes utilisées sur une même fibre sont différentes les unes des autres, et les longueurs d'onde descendantes utilisées sur une même fibre sont différentes les unes des autres.

Le but ci-dessus mentionné de l'invention, les autres buts ainsi que les caractéristiques et avantages de celle-ci ressortiront mieux de la description détaillée d'un mode préféré de réalisation de cette dernière en référence aux dessins d'accompagnement dans lesquels :
La FIGURE 1 illustre l'art antérieur avec un anneau optique de type SONET ou SDH incluant des Multiplexeurs Insertion/ Extraction ou MIE.
La FIGURE 2 représente des coupleurs optiques pouvant être utilisés pour la mise en oeuvre de l'invention.
La FIGURE 3 illustre le principe général de réalisation d'un réseau en anneau selon l'invention.
La FIGURE 4 décrit plus en détail la mise en oeuvre d'un réseau selon l'invention.
La FIGURE 5 représente le schéma synoptique d'un exemple de réalisation d'une station pour le réseau selon l'invention.
La FIGURE 6 représente le schéma synoptique d'un autre exemple de réalisation d'une station pour le réseau selon l'invention.

La **figure 2** représente des coupleurs optiques 204 et 260 pouvant être utilisés pour la mise en oeuvre de l'invention. Ce sont des coupleurs peu onéreux, disponible dans le commerce et dont il existe de nombreux modèles avec des caractéristiques variées en fonction de leur application.

Le coupleur 204 permet d'envoyer vers au moins deux fibres optiques 210, 220 l'ensemble des signaux optiques 205 reçus sur une fibre unique 200, avec des longueurs d'ondes différentes notées λ₁ à λₙ,. En fonction des caractéristiques du coupleur, la séparation peut se faire d'une façon égale ou, au contraire, un des chemins peut être favorisé au détriment de l'autre chemin ou des autres chemins s'il en existe plus de deux. Les applications de ce type de dispositif sont nombreuses comme par exemple de dériver une faible partie de la puissance de l'ensemble des longueurs d'ondes λ₁ à λₙ circulant sur une fibre en vue d'en mesurer les caractéristiques. Dans le cas fréquent de coupleurs 1 vers 2, qui est l'exemple du coupleur 204, et où l'énergie des ondes incidentes est séparée de manière égale entre les deux branches, donc divisée par deux, la pénalité (atténuation) nominale en puissance est ainsi de 3 dB ce qui est relativement peu sachant que les récepteurs optiques sont capables d'opérer dans une grande gamme d'atténuation d'au moins 10 dB et souvent plus. Dans ce type d'application, un coupleur est souvent appelé 'séparateur' pour des raisons évidentes. Dans le cas général, un coupleur de ce type est donc un séparateur 1 vers N.

Le coupleur 260 a la fonction inverse de celle décrite ci-dessus puisqu'elle consiste à combiner les signaux optiques en provenance de deux fibres optiques 230, 240, sur une seule fibre optique 250. En général cela est utilisé pour combiner des signaux ayant des longueurs d'ondes différentes, par exemple λ₁ et λ₂, de façon à ce que les ondes incidentes n'interfèrent pas, obtenant ainsi leur multiplexage (WDM) dans un même milieu de transmission.

En pratique les coupleurs sont souvent réalisés par la fusion de plusieurs fibres optiques, trois dans les exemples de la figure 2.

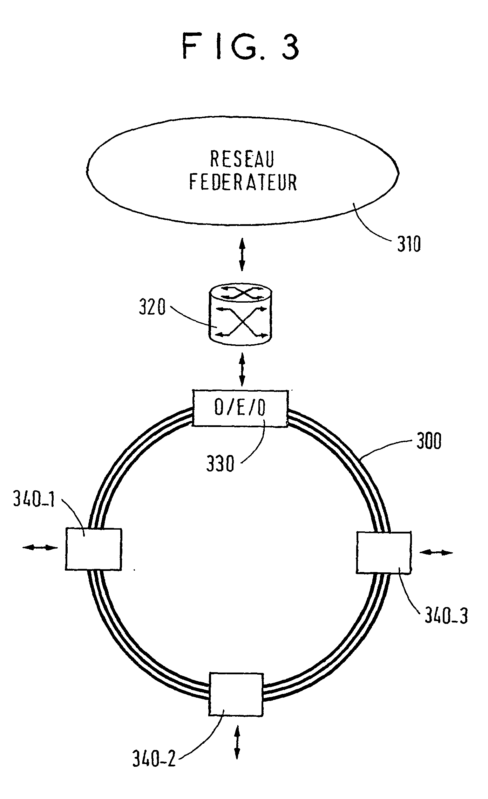

La **figure 3** est une vue générale d'un exemple de réseau en anneau selon l'invention. L'anneau 300 est constitué d'au moins une fibre optique mais en comporte deux de préférence pour pouvoir assurer la continuité du service aux utilisateurs, en cas de dysfonctionnement des appareillages connectés à une fibre, ou de rupture de transmission sur la fibre elle-même. L'anneau est relié lui-même en général à au moins un autre réseau fédérateur 310 (appelé aussi 'backbone') à travers au moins un noeud d'accès 320-330, appelé aussi point de présence (POP or 'Point Of Présence'), comportant :
- Un concentrateur 320 (appelé aussi 'hub') opérant encore essentiellement au niveau électrique, notamment parce qu'il doit toujours être équipé de moyens d'emmagasinage suffisants, sous forme de mémoires électroniques, pour pouvoir mémoriser temporairement le trafic.
- Des dispositifs de conversion O/E/O (Optique-Electrique-Optique) 330 qui permettent d'intercepter la totalité du trafic circulant sur l'anneau 300.
Les stations des utilisateurs 340-1, 340-2, 340-3 sont connectées quant à elles sur l'anneau optique à l'aide de coupleurs du type de ceux illustrés dans la figure 2. Elles sont donc à même de dériver et de recevoir, en mode optique, le trafic qui leur est destiné, et aussi d'injecter leur propre trafic à destination du noeud d'accès vers d'autres réseaux, ou à destination d'autres stations situées sur l'anneau :
- soit via le concentrateur 320 si la station réceptrice n'est pas équipée de récepteurs capables de détecter au moins une longueur d'onde montante commune à ces deux stations,
- soit directement si la station est équipée de tels récepteurs.
Le noeud d'accès 320-330 comporte :
- parmi les dispositifs O/E/O 330, au moins un émetteur optique émettant un signal optique descendant ayant au moins une première longueur d'onde en direction d'une extrémité de la dite fibre,
- parmi les dispositifs O/E/O 330, au moins un récepteur optique, à l'autre extrémité de cette fibre, et recevant un signal optique montant ayant au moins une deuxième longueur d'onde distincte de ladite première longueur d'onde ;
- des moyens permettant d'assurer la communication entre ledit récepteur optique et ledit émetteur optique, constitués essentiellement du concentrateur 320 ;
- et des moyens de contrôle d'admission d'appel, permettant aux stations 340 d'établir des connexions entre elles ou avec des stations situées hors de l'anneau, via le noeud d'accès 320-330 et le réseau fédérateur 310.

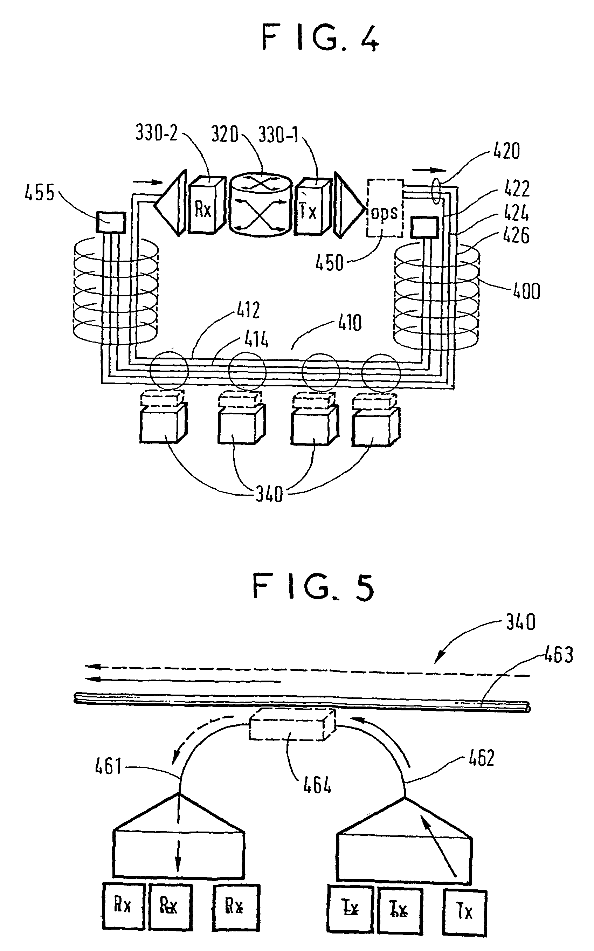

La **figure 4** reprend plus en détail l'anneau décrit dans la figure 3. La figure 4 montre toutes les longueurs d'ondes différentes 400 circulant sur la fibre 463 (ou les fibres) formant l'anneau 300. Cinq longueurs d'ondes différentes sont utilisées dans cet exemple :
- Deux longueurs d'onde 412 et 414 sont partagées par quatre stations 340 pour porter les signaux montants vers la partie réceptrice 330-2 du noeud d'accès 320-330.
- Trois longueurs d'onde 422, 424, 426, sont partagées par les quatre stations 340, pour recevoir des signaux descendants émis par la partie émettrice 330-1 du noeud d'accès 320-330 vers les stations. Celles-ci peuvent ainsi recevoir le trafic qui leur est propre, sur une (ou plusieurs) longueur d'onde particulière, mais aussi recevoir sur une (ou plusieurs) longueur d'onde partagée entre plusieurs stations.

La **figure 5** représente très schématiquement un exemple de réalisation de l'une des stations 340 illustrées sur la figure 4. Elle est couplée en mode optique, à une fibre 463, au moyen d'un coupleurs 464 à quatre accès. Les dispositifs d'émission Tx et de réception Rx de cette station sont connectées respectivement à deux de ces accès, 461 et 462. On notera que les stations doivent comporter en outre des moyens de commutation optique pour pouvoir commuter sur une autre fibre optique ou d'autres fibres optiques, si on souhaite une protection en cas de panne. Il est à noter que les stations 340 sont elles-mêmes en mesure d'intercepter les signaux optiques émis par les autres stations, si nécessaire, et même si le trafic entre stations se fait de préférence sous le contrôle des moyens de commande du concentrateur 320, pouvant agir comme maître du réseau, et capable de réguler l'ensemble du trafic circulant sur ce dernier.

Le partage des longueurs d'onde est fait par un multiplexage temporel. Chaque station prélève, parmi les paquets multiplexés temporellement sur cette longueur d'onde, ceux qui lui sont destinés. En particulier, le trafic dit point à multipoints (appelé aussi 'multicast'), ou le trafic dit de diffusion (appelé aussi 'broadcast'), c'est dire destiné respectivement à un groupe particulier de stations ou à l'ensemble des stations, peut ainsi être reçu par plus d'une station et même par toutes si nécessaire.

Dans un mode de réalisation particulier, le noeud d'accès 320-330, qui est le maître du réseau dans un mode de réalisation préféré de l'invention, pourra utiliser une longueur d'onde commune à toutes les stations pour transmettre, par exemple, des commandes pour la configuration de réseau, ou pour la mise en oeuvre d'une couche de gestion de l'accès au médium (les différentes longueurs d'onde montantes [?]), du type appelé classiquement MAC (Media Access Control). Son rôle est d'attribuer des intervalles de temps sur des longueurs d'ondes montantes aux stations qui ont du trafic à émettre, de telle façon qu'il n'y ait pas deux stations émettant au même instant sur une même longueur d'onde montante ; et d'attribuer des intervalles de temps sur des longueurs d'ondes descendantes aux stations qui ont du trafic à recevoir via le noeud d'accès, de façon que chaque station ait accès équitablement à ces ressources en longueurs d'onde descendantes.

Les stations pourront employer, suivant différents modes de réalisation de l'invention :
- un ou plusieurs émetteurs et/ou récepteurs optiques ayant des longueurs d'onde fixes, mais différentes entre elles pour les émetteurs ;
- un ou plusieurs émetteur(s) et/ou récepteurs optiques ayant de longueurs d'onde ajustables lentement permettant de changer les lois de partage de longueur d'onde sur une grande échelle de temps.
- un ou plusieurs émetteur(s) et/ou récepteurs optiques ayant de longueurs d'onde ajustables rapidement entre deux émissions/réceptions ou séries d'émissions/réceptions.

Ainsi, on aura noté que l'invention organise le transfert des données à partir de deux groupes de longueurs d'ondes ou bus optique, l'un descendant, dans le sens émission à partir du noeud d'accès 320-330 vers les stations 340, et constitué, dans cet exemple, du groupe 420 des trois longueurs d'ondes λ_{T} 422, 424, 426, et l'autre montant, dans le sens émission à partir des stations vers le noeud d'accès 320-330, et constitué ici du groupe 410 des deux longueurs d'ondes 412, 414. On peut noter également que ces bus optiques ne préjugent en rien de leur répartition physique et qu'en particulier les différentes longueurs d'ondes constituant un bus peuvent circuler sur des fibres optiques différentes si nécessaire avec cependant une terminaison adéquate, par exemple la terminaison 455 représentée sur la figure 4, en fin de bus pour éviter de perturber les transmissions.

Par ailleurs l'invention ne suppose pas que le trafic montant et le trafic descendant soit nécessairement de même importance. En fonction des applications, le trafic descendant pourra être, par exemple, plus important voire beaucoup important que le trafic montant. Ce serait le cas dans un système de vidéo distribution.

Optionnellement, au moins une fibre de secours pourra être utilisée pour pouvoir assurer la continuité de trafic en cas de panne de certains composants ou fonctions. La commutation sera réalisée par des moyens optiques 450 de commutation entre la fibre active et la fibre de secours en vue d'assurer la protection du trafic. Ainsi, il est possible selon l'invention de commuter le trafic d'une fibre optique ou d'un groupe de fibres optiques à une autre fibre optique ou groupe de fibres optiques, en mode optique, c'est à dire sans avoir à mettre en jeu les moyens de protection coûteux qui ont été développés par exemple dans le cadre des réseaux SONET (APS), au niveau électrique. Ici des dispositifs passifs tels que ceux représentés la figure 2 ou d'autres, tels que de simples commutateurs optiques à commande électrique, sont disposés notamment à l'émission côté noeud d'accès afin que l'on puisse orienter le trafic optique différemment si nécessaire.

En résumé, le système dévoilé par l'invention permet d'organiser un réseau autour d'un bus optique double (qui peut être porté par une fibre unique), chacune des deux parties du bus pouvant véhiculer une ou plusieurs longueurs d'ondes spécifiques pour permettre l'échange de données entre un noeud d'accès et des stations connectées sur ce bus. La réalisation se fait à faible coût car elle ne nécessite pas que la totalité du trafic circulant sur l'anneau soit converti en mode électrique à chaque station. En effet la connexion des stations se fait par l'intermédiaire de dispositifs optiques passifs, simples, appelés coupleurs capables de dériver une fraction de l'énergie des longueurs d'ondes circulant sur l'anneau ou au contraire de permettre l'insertion d'autres longueurs d'ondes.

L'observation par une station sur la partie descendante du bus optique double, d'une longueur d'onde ou de plusieurs longueurs d'ondes spécifiques lui permet d'extraire le trafic qui lui est destiné. Le trafic généré à partir de chaque station est inséré quant à lui sur la partie montante du bus, avec une autre ou d'autres longueurs d'ondes spécifiques, complétant la réalisation de la fonction insertion/extraction indispensable à chaque station connectée sur le réseau pour ses échanges de données avec d'autres stations ou avec le noeud d'accès au réseau.

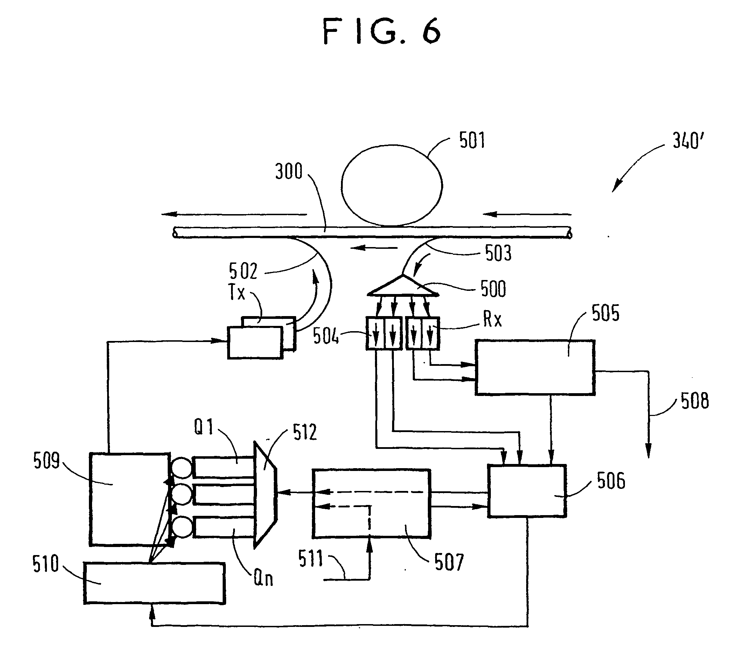

La **figure 6** représente le schéma synoptique d'un autre exemple de réalisation 340' d'une station pour le réseau selon l'invention. Elle comporte :
- une ligne à retard optique 501 intercalée sur une fibre optique 300 ;
- une unité de commande 506 qui met en oeuvre une procédure de contrôle d'admission d'appel, en collaboration avec les moyens de commande du concentrateur 320 du noeud d'accès, et qui met en oeuvre une procédure de contrôle d'accès au médium pour assurer une émission sans collision ;
- un coupleur 503 pour prélever une partie des signaux descendants sur la fibre 300, ce coupleur étant situé en amont de la ligne à retard 501 ;
- un démultiplexeur spectral 500 qui sépare les différentes longueurs d'onde des signaux descendants prélevés par le coupleur 503 ;
- au moins un récepteur optique Rx, relié à une sorties du démultiplexeur 500 ;
- au moins un émetteur optique Tx relié à une entrée du coupleur 502 pour émettre sur une longueur d'onde montante ;
- au moins une photodiode 504 reliée à une sortie sorties du démultiplexeur 500 ; chaque photodiode 504 recevant respectivement sur la longueur d'onde d'un émetteur optique Tx, et étant reliée à l'unité de commande 506 ; cette photodiode permettant de mesurer la puissance optique sur une longueur d'onde montante pour la procédure de contrôle d'accès au médium ;
- un coupleur 502 pour insérer des signaux montants sur la fibre 300, en aval de la ligne à retard 501 ;
- un circuit électronique 505 qui reconnaît et qui traite des paquets de données adressés à cette station ;
- une pluralité de queues, Q1,..., Qn de type premier-entré-premier-sorti, chaque queue stockant respectivement un type de paquet de données à insérer sur l'anneau, c'est à dire correspondant à une priorité ou un niveau de qualité de service garanti par un contrat ;
- un circuit électronique 507 ayant une entrée 511 recevant du trafic à insérer sur l'anneau ;
- un circuit d'aiguillage 512 qui écrit des paquets de données, du trafic à insérer, dans les queues Q1, ..., Qn, selon les priorités respectives de ces paquets ;
- un circuit électronique 510 réalisant la lecture dans les queues Q1,...,Qn, à des rythmes définis respectivement par des commandes de l'unité de commande 506 ;
- et un circuit électronique 509 qui adapte le format des paquets lus dans les queues Q1, ..., Qn avant de les fournir aux émetteurs Tx.
Les paquets de données qui arrivent par le réseau en anneau et qui transitent par la station ne sont pas stockées dans des mémoires électroniques mais seulement retardées par la ligne à retard 501 pour laisser disponible un temps de traitement. Par contre, les paquets de données du trafic à insérer sur l'anneau sont stockés dans les queues Q1, ..., Qn en attendant de pouvoir être émis sur l'anneau.

La procédure de contrôle d'accès au médium est fondée sur une détection, par une photodiode (ou les photodiodes) 504 et l'unité de commande 506, d'au moins une longueur d'onde disponible à un instant donné pour émettre du trafic montant. D'autre part, la procédure de contrôle d'admission d'appel est fondée sur une détection, par l'unité de commande 506, des paquets de contrôle assurant une régulation du trafic inséré par chaque station. Cette régulation est exercée par les moyens de commande du point d'accès 320-330, afin d'assurer une certaine équité de l'accès pour toutes les stations, et un respect des priorités respectives des différents type de données. En l'absence de cette régulation, les stations recevant en premier le signaux descendants seraient toujours favorisées par rapport aux autres, et des paquets à faible priorité seraient insérés par ces stations favorisées avant les paquets à haute priorité des autres stations.

Le circuit 505 reçoit puis sépare des paquets contenants des messages de gestion, et des paquets de données utiles, en provenance du noeud d'accès 320-330. Les messages de gestion permettent la mise en oeuvre du contrôle de flux dans le réseau ; ils sont transmis à l'unité de commande 506. Les paquets de données utiles sont transmis à une sortie 508. L'information sur la présence d'un trou suffisant sur une longueur d'onde montante est envoyée à l'émetteur Tx correspondant pour déclencher l'émission d'un nouveau paquet qui a déjà passe l'étape du contrôle d'admission d'appel. Le dispositif 509 comporte une mémoire dans laquelle est chargé le prochain paquet a émettre]. Le dispositif 509 en informe, à chaque instant, l'unité de commande 506de la présence, ou non, d'un paquet prêt pour être émis.

L'unité de commande 506 prépare des messages de gestion à émettre en direction du noeud d'accès 330-320 et les transmet au circuit 507 pour qu'ils soient mis sous la formes de paquets, puis mémorisés dans la queue la plus prioritaire parmi les queues Q1, ..., Qn.

Chaque queue est vidée à un rythme qui est fonction d'une valeur de seuil qui est envoyée à cette station par les moyens de commande situés dans le noeud d'accès 320-330, Ce rythme est défini par le circuit de commande de lecture 510 en appliquant un algorithme consistant notamment à comparer le remplissage de la queue à cette valeur de seuil, pour décider s'il est temps d'extraire un paquet de cette queue. Cet algorithme est analogue à l'algorithme classique du seau percé (Leaky bucket algorithm). Si les moyens de commande situés dans le noeud d'accès 320-330 constatent une plus grande disponibilité d'une longueur d'onde, ils peuvent abaisser la valeur de seuil pour une station utilisant cette longueur d'onde, afin d'accélérer le rythme d'extraction des paquets dans une queue.

Quand une station 340' a besoin d'insérer des paquets de données ayant une certaine priorité, elle n'y est autorisé que si l'occupation du réseau, telle qu'elle est vue au point où est située cette station, le permet. L'unité de commande 506 envoie aux moyens de commande situés dans le noeud d'accès 320-330 un paquet contenant une requête de bande passante, indiquant le type et la quantité des données à insérer dans les signaux montants. Les moyens de commande du point d'accès 320-330 répondent par un paquet contenant un message de réponse, comportant une valeur de seuil, pour une certaine longueur d'onde (voire plusieurs longueurs d'onde), et pour une priorité donnée (qui était indiquée dans le message de requête).

Pour déterminer une valeur de seuil à attribuer à une station, les moyens de commande du point d'accès 320-330 déterminent la quantité de trafic présente sur les longueur d'onde montantes que cette station est capable d'utiliser ; et consultent une table indiquant une valeur de seuil prédéterminée. Chaque valeur de seuil a été prédéterminée par modélisation, en fonction de la quantité de trafic, du type de données, et de la position de la station le long de l'anneau, pour chacune des longueur d'onde montantes.

Les moyens de commande du point d'accès 320-330 déterminent de même de nouvelles valeurs de seuil respectivement pour les autres stations qui étaient déjà en train d'insérer des paquets. Ces nouvelles valeurs de seuil tiennent compte du type de paquet de données en cours d'insertion, et des quantités à insérer, tels qu'indiquées dans les requêtes de bande passante envoyées antérieurement par ces station. Ces valeurs de seuil sont envoyées respectivement aux stations concernées, dans des messages de gestion. Quand une même station demande à insérer différents type de paquet, elle reçoit une valeur de seuil respectivement pour chaque type de paquet.

Quand une station n'a plus de trafic à insérer, elle envoie un message de signalisation pour en informer les moyens de commande du point d'accès 320-330.

Quand une station a trop de trafic à insérer, c'est à dire quand une queue arrive à saturation, elle envoie un message de signalisation pour en informer les moyens de commande du point d'accès 320-330. Ces derniers appliquent alors une procédure consistant à réduire le rythme d'insertion de paquets par les autres stations utilisant la même longueur d'onde que la station qui est congestionnée.

Dans une autre réalisation, on peut utiliser un coupleur optique de type 2 vers 2, comme sur la figure 5. Il faut alors placer la ligne à retard 501 en amont de ce coupleur. La photodiode 504 doit cependant rester en amont de la ligne à retard 501 pour assurer sa fonction dans la procédure de contrôle d'accès au médium. On prévoit alors un autre coupleur de type 1 vers 2 placé en amont de la ligne à retard et relié à la photodiode 504.

## Revendications

1. Réseau optique en anneau comprenant au moins une fibre optique (300) et au moins deux stations (340) couplée sur ladite fibre optique au moyen de coupleurs optiques (461, 462), les deux extrémités de ladite fibre optique étant reliées à un noeud d'accès (320, 330) audit réseau optique; ledit noeud d'accès (320, 330) comprenant :
- au moins un émetteur optique (330-1) émettant un signal optique descendant ayant au moins une première longueur d'onde (420) en direction d'une extrémité de la dite fibre (300),
- ou moins un récepteur optique (330-2), à l'autre extrémité de cette fibre (300), et recevant un signal optique montant ayant au moins une deuxième longueur d'onde dite "montante", distincte de ladite première longueur d'onde ;
- et des moyens (320) permettant d'assurer la communication entre ledit récepteur optique (330-2) et ledit émetteur optique (330-1) ;
ledit réseau optique étant **caractérisé en ce qu'**une pluralité de stations partagent au moins une longueur d'onde montante pour émettre chacune vers un récepteur optique dudit noeud d'accès, **en ce qu'**il comporte des moyens (320) de contrôle d'accès au médium, permettant ledit partage de longueur d'onde montante, et **en ce que** l'une au moins des stations comporte des moyens pour intercepter (461, 503) et détecter (RX, 504) au moins une dite longueur d'onde montante partagée.

2. Réseau optique selon la revendication 1, **caractérisé en ce que** les moyens (320) de contrôle d'accès au médium, permettent à une pluralité de stations de partager au moins une longueur d'onde descendante.

3. Réseau optique selon la revendication 1, **caractérisé en ce qu'**il comporte en outre des moyens de contrôle d'admission d'appel (320) qui comportent des moyens pour :
- recevoir un message de requête de bonde passante, émis par une station, et indiquant un type de données à insérer sur une longueur d'onde montante ;
- déterminer une valeur de paramètre définissant un rythme d'insertion de données sur une longueur d'onde montante utilisable par la station ayant émis un message de requête de bande passante; cette valeur étant déterminée en fonction du trafic présent sur l'anneau, et du type des données à insérer ;
- émettre un message de commande adressée à cette station et contenant la valeur de paramètre.

4. Réseau optique selon la revendication 1, **caractérisé en ce que** les émetteurs et/ou récepteurs optiques des stations (340) comprennent des moyens permettant l'ajustement des longueurs d'onde utilisées.

5. Réseau optique selon la revendication 1 ou 2, **caractérisé en ce qu'**il comprend au moins une fibre optique active (300) et une fibre optique de secours.

6. Réseau optique selon la revendication 5, **caractérisé en ce qu'**il inclut des moyens optiques (450) de commutation entre ladite fibre active et ladite fibre de secours en vue d'assurer la protection du trafic.

7. Réseau optique selon la revendication 6, **caractérisé en ce que** les stations sont couplées sur ladite fibre active et sur ladite fibre de secours.

8. Réseau optique selon la revendication 2, **caractérisé en ce qu'**une longueur d'onde descendante partagée est utilisée pour la gestion du réseau.

## Claims

1. A ring optical network comprising at least one optical fiber (300) and at least two stations (340) coupled to said optical fiber by optical couplers (461, 462), both ends of said optical fiber being connected to an access node (320, 330) of said optical network, said access node (320, 330) comprising:
- at least one optical sender (330-1) for sending a downlink optical signal having at least a first wavelength (420) toward one end of said fiber (300),
- at least one optical receiver (330-2) at the other end of said fiber (300) and receiving an uplink optical signal having at least one second uplink wavelength different from said first wavelength, and
- means (320) for providing communication between said optical receiver (330-2) and said optical sender (330-1),
said optical network being **characterized in that** a plurality of stations share at least one uplink wavelength for each to send said access node to an optical receiver of said node, **in that** it comprises medium access control means (320) allowing said sharing of an uplink wavelength, and **in that** at least one of the stations comprises interception means (461, 503) and detection means (RX, 504) for intercepting and detecting said at least one shared uplink wavelength.

2. An optical network according to claim 1, **characterized in that** the medium access control means (320) allow a plurality of stations to share at least one downlink wavelength.

3. An optical network according to claim 1, **characterized in that** it further comprises call admission control means (320) that comprise means for:
- receiving a bandwidth request message sent by a station and indicating a type of data to be added on an uplink wavelength,
- determining a parameter value defining a rate of addition of data to an uplink wavelength usable by the station that has sent a bandwidth request message, said value being determined as a function of the traffic present on the ring and the type of data to be added, and
- sending a control message containing said parameter value to said station.

4. An optical network according to claim 1, **characterized in that** the optical senders and/or receivers of the stations (340) comprise means for adjusting the wavelengths used.

5. An optical network according to claim 1 or claim 2, **characterized in that** it comprises at least one active optical fiber (300) and one back-up optical fiber.

6. An optical network according to claim 5, **characterized in that** it includes optical means (450) for switching between said active fiber and said back-up fiber to protect traffic.

7. An optical network according to claim 6, **characterized in that** the stations are coupled to said active fiber and to said back-up fiber.

8. An optical network according to claim 2, **characterized in that** a shared downlink wavelength is used for network management.

## Patentansprüche

1. Optisches Ringnetzwerk, welches mindestens eine Lichtleitfaser (300) und mindestens zwei über diese Lichtleitfaser mit Hilfe optischer Koppler (461, 462) gekoppelte Stationen (340) aufweist, wobei die beiden Enden dieser Lichtleitfaser mit einem Zugangsknoten (320, 330) zu diesem optischen Netzwerk verbunden sind; hierbei weist der Zugangsknoten (320, 330) auf:
- mindestens einen optischen Sender (330-1), der ein optisches Downlink-Signal sendet, welches mindestens eine erste Wellenlänge (420) in Richtung eines Endes dieser Lichtleitfaser (300) aufweist;
- mindestens einen optischen Empfänger (330-2) am anderen Ende dieser Lichtleitfaser (300), der ein optisches Uplink-Signal empfängt, welches mindestens eine zweite, von der ersten Wellenlänge verschiedene sogenannte Uplink-Wellenlänge aufweist;
- und Vorrichtungen (320), mit denen die Kommunikation zwischen dem optischen Empfänger (330-2) und dem optischen Sender (330-1) sichergestellt werden kann;
wobei das optische Netzwerk **dadurch gekennzeichnet ist, dass** eine Vielzahl von Stationen mindestens eine Uplink-Wellenlänge gemeinsam nutzen, damit jede zu einem optischen Empfänger dieses Zugangsknotens senden kann, **dadurch**, dass es Vorrichtungen (320) zur Medienzugangskontrolle aufweist, die diese gemeinsame Nutzung einer Uplink-Wellenlänge ermöglichen, sowie **dadurch**, dass mindestens die eine der Stationen Vorrichtungen aufweist, um zumindest eine sogenannte gemeinsam genutzte Uplink-Wellenlänge zu erfassen (461, 503) und zu erkennen (RX, 504).

2. Optisches Netzwerk nach Anspruch 1, **dadurch gekennzeichnet, dass** die Vorrichtungen (320) zur Medienzugangskontrolle einer Vielzahl von Stationen ermöglichen, mindestens eine Downlink-Wellenlänge gemeinsam zu nutzen.

3. Optisches Netzwerk nach Anspruch 1, **dadurch gekennzeichnet, dass** es außerdem Vorrichtungen zur Anrufzugangskontrolle (320) aufweist, die Vorrichtungen aufweisen zum:
- Empfangen einer Bandbreitenanforderungsmeldung, die von einer Station gesendet wird und die einen auf einer Uplink-Wellenlänge einzufügenden Datentyp angibt;
- Bestimmen eines Parameterwertes, der einen Rhythmus für das Einfügen von Daten auf einer Uplink-Wellenlänge definiert, die von der Station genutzt werden kann, welche eine Bandbreitenanforderungsmeldung gesendet hat; dieser Wert wird hierbei in Abhängigkeit von dem auf dem Ring vorhandenen Verkehr und dem Typ der einzufügenden Daten bestimmt;
- Senden einer Steuerungsmeldung, die an diese Station adressiert ist und den Parameterwert enthält.

4. Optisches Netzwerk nach Anspruch 1, **dadurch gekennzeichnet, dass** die optischen Sender und/oder Empfänger der Stationen (340) Vorrichtungen aufweisen, welche die Anpassung der genutzten Wellenlängen ermöglichen.

5. Optisches Netzwerk nach Anspruch 1 oder 2, **dadurch gekennzeichnet, dass** es mindestens eine aktive Lichtleitfaser (300) und eine Ersatzlichtleitfaser für Notfälle aufweist.

6. Optisches Netzwerk nach Anspruch 5, **dadurch gekennzeichnet, dass** es optische Vorrichtungen (450) zur Umschaltung zwischen der aktiven Faser und der Ersatzfaser enthält, um den Schutz des Verkehrs sicherzustellen.

7. Optisches Netzwerk nach Anspruch 6, **dadurch gekennzeichnet, dass** die Stationen auf der aktiven Faser und auf der Ersatzfaser gekoppelt sind.

8. Optisches Netzwerk nach Anspruch 2, **dadurch gekennzeichnet, dass** eine gemeinsam genutzte Downlink-Wellenlänge für das Netzwerkmanagement genutzt wird.
